# FASCICULE DE BREVET EUROPEEN

(11) **EP 0 561 707 B1**
(45) Date de publication et mention de la délivrance du brevet: **03.03.1999**
(21) Numéro de dépôt: 93400694.1
(22) Date de dépôt: 18.03.1993
(51) Int. Cl.: H02P 9/30, H02J 7/14

(54) **Circuit d'alternateur à régulation modifiée au démarrage**
Drehstromgeneratorschaltung mit modifizierter Anlaufregelung
Alternator circuit for modified start-up control

(30) Priorité: 19.03.1992 FR 9203288
(43) Date de publication de la demande: 22.09.1993
(73) Titulaire: VALEO EQUIPEMENTS ELECTRIQUES MOTEUR, 94000 Créteil (FR)
(72) Inventeur: Pierret, Jean-Marie, F-75012 Paris (FR); Sisavath, Georges, F-77400 St Thibault des Vignes (FR)
(74) Mandataire: Martin, Jean-Jacques

(56) Documents cités:
- EP-A- 0 430 203
- US-A- 3 959 708
- US-A- 4 477 766

## Description

La présente invention concerne d'une façon générale les circuits d'alternateurs, notamment pour véhicules automobiles. Elle concerne plus particulièrement un nouveau circuit d'alternateur destiné à minimiser le couple résistant présenté par l'alternateur pendant une phase de démarrage du moteur associé.

Un problème classique dans le démarrage des moteurs de véhicules automobiles, particulièrement aigu en particulier dans le cas des moteurs diesel de forte cylindrée, réside en ce que l'alternateur, dès qu'il s'amorce et commence à débiter du courant dans les charges en service du circuit électrique du véhicule, présente au moteur un couple résistant important. Ce couple, outre qu'il provoque une surcharge indésirable du démarreur et rend le démarrage difficile, risque en outre de provoquer un calage du moteur une fois mis en route après l'arrêt du démarreur.

Une solution connue à ce problème, est décrite dans le document EP-A-0 430 203, qui enseigne un circuit d'alternateur à régulateur "monofonction" selon le préambule de la revendication 1; elle consiste à limiter l'excitation de l'alternateur pendant une durée déterminée à la mise en route du moteur, en effectuant une régulation prioritaire qui consiste à maintenir la tension de sortie auxiliaire des diodes "trio" au voisinage d'une valeur fixe de 10 volts par exemple.

Cette solution connue, bien qu'elle minimise effectivement le couple résistant exercé par l'alternateur, est cependant désavantageuse en ce qu'il devient impossible d'assurer une bonne gestion de la lampe témoin de signalisation de défauts. En effet, cette lampe étant alimentée entre la tension de sortie des diodes trio et la tension de batterie, elle serait alors exposée à une tension de plusieurs volts et resterait allumée pendant cette durée. Ceci correspondrait à l'indication d'un défaut qui n'existe pas.

La présente invention vise à pallier cette limitation de l'état de la technique et à proposer, selon un premier aspect, un circuit d'alternateur à régulateur "monofonction" qui puisse comporter une lampe de signalisation de défauts branchée de la manière habituelle, et donc sans nécessiter de circuiterie additionnelle de gestion de défauts, tout en évitant que cette lampe ne s'allume pendant la période de régulation prioritaire au démarrage.

A cet effet, la présente invention propose un circuit d'alternateur tel que défini dans la revendication 1.

Des aspects préférés, mais non limitatifs, de ce circuit sont exposés dans les revendications dépendantes 2 à 4.

Par ailleurs, dans le cas d'un alternateur à régulateur dit "multifonction", il est classique de gérer l'allumage et l'extinction de la lampe de signalisation de défauts par un circuit spécifique comportant une borne de sortie spécifique pour lampe et qui, notamment, provoque l'extinction de la lampe dès qu'une tension dite "phase", prélevée sur un bobinage d'induit de l'alternateur, dépasse une valeur prédéterminée (typiquement de 8 volts).

Et l'on connaît par le document US-A-4 477 766 un circuit d'alternateur, conforme au préambule de la revendication 5, qui permet en cas de délestage de charge d'assurer pendant une certaine durée une régulation basée sur un maintien de la tension phase sur une certaine valeur, supérieure à la valeur prédéterminée précitée (et typiquement de 10 volts), pour que dans ces circonstances la lampe reste bien éteinte.

On notera que ce circuit connu ne tient nullement compte de l'état de charge de la batterie et pourra donc dans certains cas amener l'alternateur à un point de fonctionnement très éloigné de son point de fonctionnement nominal. Ceci n'est pas particulièrement préjudiciable dans le seul cas visé par ce document, à savoir celui d'un délestage de charge, car précisément le point de fonctionnement de l'alternateur doit par définition s'abaisser.

La présente invention vise selon un deuxième aspect à pallier cette limitation de l'état de la technique et à proposer un circuit d'alternateur du type précité dont le point de fonctionnement pendant la phase temporaire de régulation prioritaire tienne compte de l'état de charge de la batterie, c'est-à-dire de son niveau de tension, de manière à ce que cette régulation prioritaire puisse être utilisée sans inconvénient pendant une phase de démarrage du moteur à combustion associé.

Elle propose à cet effet un circuit d'alternateur tel que défini dans la revendication 5.

Des aspects préférés, mais non limitatifs, de ce circuit sont exposés dans les revendications dépendantes 6 à 12.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
- la figure 1 est un schéma de principe d'un circuit selon la présente invention,
- la figure 2 est un schéma détaillé d'un circuit selon une première forme de réalisation concrète de l'invention,
- la figure 3 est un schéma détaillé d'un circuit selon une deuxième forme de réalisation concrète de l'invention, et
- la figure 4 est un schéma détaillé d'un circuit selon une variante de la deuxième forme de réalisation de la figure 3.

On notera préliminairement que, d'une figure à l'autre, des éléments, composants ou parties identiques ou similaires sont désignés autant que possible par les mêmes signes de référence.

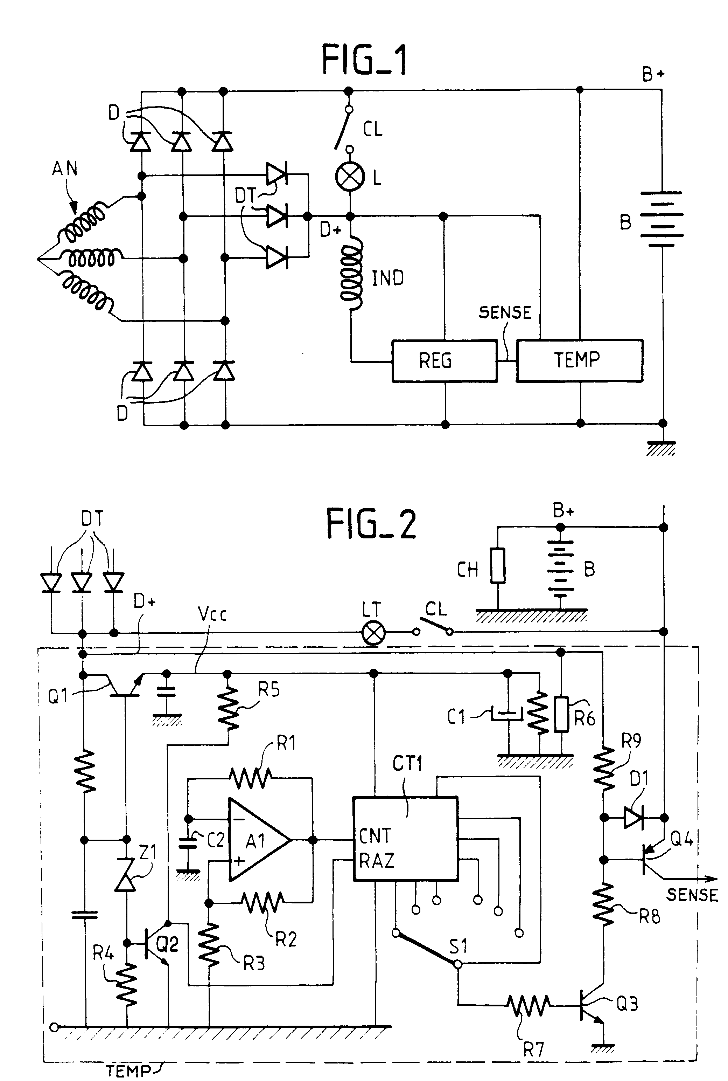

En référence tout d'abord à la figure 1, on a représenté un circuit d'alternateur. L'alternateur triphasé AN est représenté par ses trois enroulements de stator, qui sont reliés classiquement à un groupe de six diodes de redressement D. Les deux bornes de sortie du redresseur sont reliées respectivement aux deux bornes d'une batterie B.

Il est prévu également classiquement un groupe de trois diodes auxiliaires dites diodes trio DT, dont les cathodes sont reliées à une première borne d'une lampe témoin LT. La seconde borne de LT est reliée à une première borne d'un interrupteur CL constitué par la clé de contact du véhicule, la seconde borne de l'interrupteur étant reliée à la ligne B+ elle-même reliée au pôle positif de B.

L'enroulement d'excitation de l'alternateur est indiqué par IND. Il est branché entre la sortie des diodes trio DT et une sortie d'un circuit régulateur REG. Le courant d'excitation qui le traverse est commandé classiquement par le circuit REG, essentiellement en fonction d'une comparaison faite par ce circuit entre la tension B+ via un circuit de régulation prioritaire temporisé TEMP et une ou plusieurs tensions de référence.

Selon le principe de base de la présente invention, le circuit de régulation prioritaire temporisé TEMP prévu en association avec le régulateur REG a pour objet, sans avoir à modifier la construction interne du circuit REG, d'amener rapidement la tension D+ à un niveau suffisant, proche de B+, pour provoquer l'extinction de la lampe LT, tout en évitant tout accroissement de D+ au delà de ce niveau B+ pour éviter que l'alternateur ne débite dans les charges en service du circuit électrique du véhicule.

Par conséquent, le couple résistant exercé par l'alternateur sur le moteur pendant ce démarrage est fortement réduit, ce qui facilite ce démarrage et évite en particulier tout calage intempestif du moteur, notamment à froid. Mais on évite en même temps de signaler au conducteur un défaut qui n'existe pas.

Plus précisément, le circuit de régulation prioritaire selon l'invention est conçu pour que, pendant la phase de démarrage du moteur, deux états soient alternativement appliqués à l'entrée de détection (entrée SENSE) du circuit REG, pour respectivement faire croître ou décroître le courant d'excitation dans IND de manière à amener la tension D+ à varier étroitement autour d'une valeur de régulation prioritaire avantageusement égale à la tension de batterie B+ diminuée d'une certaine faible valeur.

Le circuit de régulation prioritaire temporisé TEMP peut par exemple entrer en action dès que le circuit REG s'amorce, c'est-à-dire dès que la tension D+ a atteint une valeur déterminée par exemple de 5 volts, qui va être utilisée pour l'alimentation du circuit TEMP, et peut être activé par exemple pendant une durée de quelques secondes à partir de l'amorçage du circuit REG.

On va maintenant décrire en référence à la figure 2 une première forme de réalisation concrète du circuit de temporisation TEMP selon l'invention.

Ce circuit se compose principalement de trois éléments:
1) un circuit d'alimentation stabilisée reçoit en entrée la tension D+ et est construit autour d'un transistor bipolaire Q1 de type NPN, monté en amplificateur de courant. Sa tension de sortie Vcc est déterminée par la valeur d'une diode zéner Z1. Le condensateur C1 est un condensateur de filtrage classique.
2) Un oscillateur est construit autour d'un amplificateur opérationnel A1 et d'un circuit RC constitué par les composants R1 et C2. Les résistances R2 et R3 ont pour objet de stabiliser à une valeur donnée le rapport cyclique du signal de sortie de l'oscillateur, qui est un signal essentiellement rectangulaire.
3) Un temporisateur construit autour d'un compteur CT1 à sortie parallèle dont l'entrée de comptage CNT est reliée à la sortie de l'oscillateur. Un transistor bipolaire NPN Q2 a sa base reliée au point commun entre le pied de la diode zéner Z1 et une résistance R4, dont la borne opposée est reliée à la masse. Le collecteur de Q2 est relié à la tension Vcc par une résistance R5 et son émetteur directement à la masse. Le collecteur de Q2 est en outre relié à une entrée de remise à zéro RAZ du compteur CT1. Au compteur CT1 est associé, à des fins purement expérimentales, un sélecteur S1 qui permet de faire varier la valeur de la temporisation assurée par celui-ci. La sortie sélectionnée du compteur CT1 attaque la base d'un transistor NPN Q3 via une résistance R7. L'émetteur de Q3 est à la masse, tandis que son collecteur est reliée via une résistance R8 à la base d'un transistor PNP Q4, qui est également reliée à la tension D+ issue des diodes trio DT via une résistance R9. Le collecteur de Q4 est reliée à l'entrée de détection SENSE du circuit régulateur (non représenté), qui est l'entrée sur laquelle la tension à réguler sur une valeur donnée, fixée par une référence de tension interne du régulateur, est appliquée. Une diode D1 est branchée dans le sens conducteur entre la base de Q4 et son émetteur, ce dernier étant relié à la tension de batterie B+. CH indique la charge appliquée à la batterie lors du démarrage.

Enfin on notera qu'une résistance R6 de faible valeur est prévue entre la ligne D+ et la masse.

La sortie des diodes trio DT est reliée au B+ via la lampe LT et la clé de contact CL.

On va maintenant décrire le fonctionnement du circuit de la figure 2.

Lorsque la clé CL est fermée et que le démarreur du véhicule commence à entraîner le moteur, une certaine tension prend naissance à la sortie des diodes DT. Dès que cette tension a atteint une valeur suffisante, les circuits A1 et CT1 sont alimentés, par exemple par une tension positive de l'ordre de 5 volts. Le compteur effectue un comptage ascendant rythmé par les créneaux issus de A1. Tant que le comptage n'a pas atteint une valeur donnée, en l'occurence 2n, n étant déterminé par la position de S1, la base de Q3 reçoit une tension nulle, et Q3 est bloqué. Le transistor Q4 a pour effet de comparer la différence de tension entre B+ et D+, appliquées respectivement à son émetteur et à sa base, à sa tension émetteur-base Vbe. Si la différence entre B+ et D+ est supérieure à Vbe, alors Q4 est passant et applique à l'entrée SENSE du régulateur une tension légèrement inférieure à B+. Ceci provoque, avec un régulateur classique, un accroissement du courant d'excitation, qui tend lui-même à faire croître la tension D+. Et dès que la différence entre B+ et D+ devient inférieure à Vbe, alors Q4 se bloque et présente à l'entrée SENSE du régulateur un état de haute impédance. Il en résulte, par construction du circuit régulateur, que celui-ci amène le courant d'excitation de l'alternateur à diminuer. (On pourrait en variante prévoir une résistance entre le collecteur de Q4 et la masse).

Ainsi le transistor Q4 a pour effet, pendant la temporisation effectuée par CT1, d'outrepasser la régulation sur la référence de tension interne du circuit régulateur, en effectuant une régulation de la tension D+ sur une tension légèrement inférieure à B+ et égale à B+-Vbe. Cette régulation prioritaire pendant toute la durée de la phase de démarrage présente le double avantage suivant:
a) en maintenant la tension D+ inférieure à la tension B+, on assure que l'alternateur ne débite pas de courant, et celui-ci présente donc au moteur en début de rotation un couple résistant minimal;
b) en permettant toutefois à la tension D+ de croître rapidement jusqu'à une valeur s'approchant de la tension B+, on provoque dans les délais habituels, de l'ordre de quelques centaines de millisecondes, l'extinction de la lampe témoin LT.

Dès que la durée de temporisation choisie s'est écoulée, alors la sortie du sélecteur S1 est portée à une tension positive de l'ordre de 5 volts, Q3 devient passant et maintient Q4 à l'état passant. De cette manière, l'entrée SENSE du régulateur reçoit alors en permanence la tension B+ via le transistor Q4, dont la tension de jonction émetteur-collecteur peut être considérée comme négligeable en régime saturé. La régulation va alors s'effectuer normalement par comparaison de la tension B+ avec la tension de référence interne du régulateur REG.

On observera ici que le transistor Q2 a pour objet d'effectuer une remise à zéro systématique de CT1 à chaque mise en route du moteur. Plus précisément, tant que la tension D+, en phase de croissance dès la mise en rotation de l'alternateur par le moteur, est inférieure à une tension de seuil voisine de la tension de zéner de Z1, alors Q2 est bloqué et une tension positive de remise à zéro est appliquée à l'entrée RAZ de CT1, pour empêcher le comptage. Et dès que la tension D+ franchit la tension de seuil précitée, alors Q2 devient passant et la tension positive appliquée jusque là à l'entrée RAZ disparaît et le compteur CT1 entre en action pour une durée de temporisation prédéterminée.

On notera par ailleurs que la résistance de faible valeur R6 a pour objet de charger le potentiel D+ pour éviter que ce potentiel soit maintenu à la valeur de B+ à travers la lampe LT et la clé CL.

On remarquera pour terminer que le circuit représenté sur la figure 2 est adapté aux régulateurs dits "monofonction", comportant classiquement, pour son raccordement avec l'environnement extérieur, quatre bornes (masse, sortie vers IND, alimentation positive et entrée SENSE).

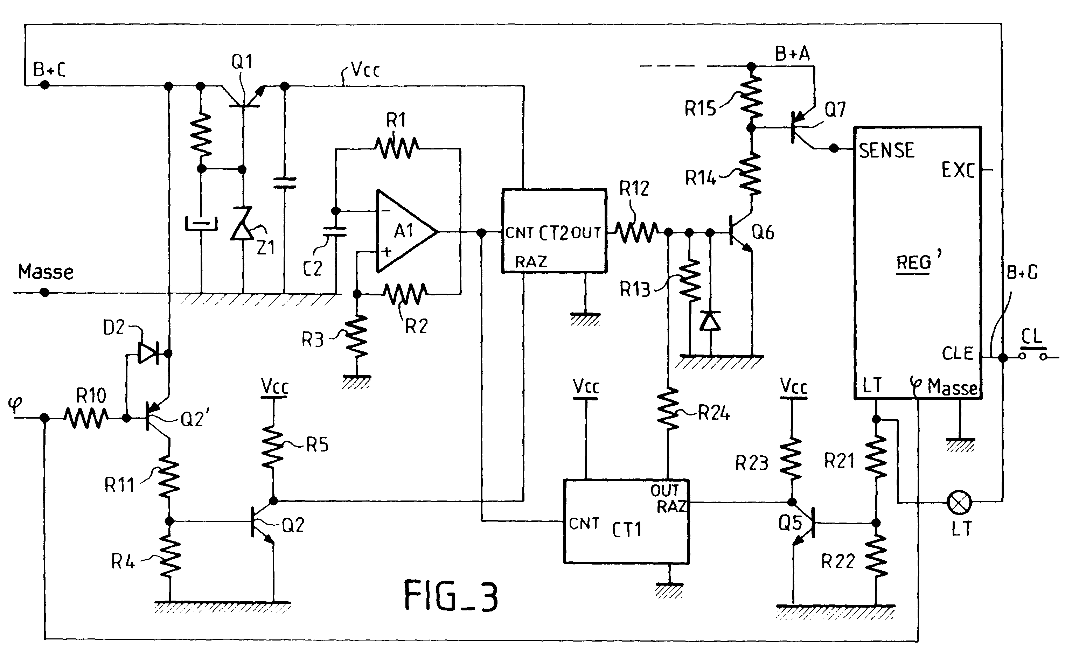

On va maintenant décrire en référence à la figure 3 une deuxième forme de réalisation concrète d'un circuit selon l'invention, adaptée cette fois-ci à un régulateur de type "multifonction".

Un tel régulateur, désigné par la référence REG' sur la figure 3, comprend classiquement une entrée SENSE pour la tension sur la base de laquelle la régulation est effectuée (normalement la tension B+A, à savoir la tension de batterie), une sortie EXC reliée à l'enroulement d'excitation (non représenté) de l'alternateur, une borne d'entrée CLE pour la tension de batterie par l'intermédiaire de l'interrupteur CL, cette tension étant notée B+C, une sortie LT pour la commande de l'allumage/extinction de la lampe témoin, une entrée phase φ pour un signal de phase issu de l'alternateur, et une borne de masse.

On va maintenant décrire en détail le circuit de la figure 3.

L'alimentation stabilisée (tension Vcc) du circuit est construite autour du transistor NPN Q1, d'une manière analogue au cas de la figure 2 à l'exception du fait que Q1 reçoit la tension B+C. De même, l'amplificateur A1 constitue un oscillateur pour la fourniture de signaux de cadencement à des compteurs numériques qui vont constituer deux temporisateurs.

Le signal de phase φ de l'alternateur est appliqué à la base d'un transistor PNP Q2' par l'intermédiaire d'une résistance R10. Une diode D2 est branchée dans le sens conducteur entre la base et l'émetteur de Q2'. Son collecteur est relié à la masse via deux résistances R11 et R4, dont le point milieu attaque la base d'un transistor Q2. L'émetteur de Q2 est à la masse et son collecteur est relié à Vcc via une résistance R5 et attaque l'entrée de remise à zéro RAZ d'un compteur numérique CT2 qui reçoit sur son entrée de comptage les créneaux rectangulaires issus de A1.

La sortie de CT2 est reliée par un pont résistif diviseur R12, R13 à la base d'un transistor NPN Q6 dont l'émetteur est à la masse et dont le collecteur est relié à la ligne de tension B+A via deux résistances R14, R15. Le point commun de ces deux résistances attaque la base d'un transistor PNP Q7 dont l'émetteur est relié à la ligne B+A et dont le collecteur est relié à l'entrée SENSE du circuit REG'.

La sortie LT du circuit REG' est reliée à une première borne de la lampe, LT, dont la seconde borne est reliée à la tension B+C. La sortie LT est également reliée via un pont diviseur résistif R21, R22 à la base d'un transistor NPN Q5 dont l'émetteur est à la masse et dont le collecteur est relié à la tension Vcc via une résistance R23. Le collecteur de Q5 attaque l'entrée de remise à zéro d'un compteur numérique CT1. L'entrée de comptage de CT1 est reliée à la sortie de A1, et sa sortie attaque la base de Q6 via une résistance R24.

On va maintenant décrire dans le détail le fonctionnement du circuit de la figure 3. On notera préliminairement que le compteur CT2 est destiné à assurer une temporisation de courte durée, par exemple de l'ordre de 20 millisecondes, tandis que le compteur CT1 est destiné à assurer une temporisation beaucoup plus longue, par exemple de l'ordre de plusieurs secondes.

Dès que la clé de contact CL est fermée et que l'alternateur commence à être entraîné via le démarreur et le moteur, un signal apparaît sur l'entrée ϕ du circuit. Tant que l'amplitude de ce signal reste inférieure à un seuil, qui est déterminé par la jonction émetteur-base de Q2', les transistors Q2'et Q2 sont passants et le compteur CT2 est libéré par l'application d'une tension nulle sur son entrée RAZ. Après environ 20 millisecondes, le compteur CT2 délivre sur sa sortie OUT une tension de niveau haut, et Q6 est passant. Q7 est donc également passant et l'entrée SENSE du circuit REG' reçoit via Q7 une tension lègèrement inférieure à la tension de batterie B+A. Le régulateur opère alors un accroissement du courant d'excitation, de façon classique en soi, qui va provoquer un accroissement de l'amplitude du signal ϕ. Dès que ce signal atteint une amplitude proche du potentiel B+C, par exemple de l'ordre de 9 à 10 volts, Q2' et Q2 deviennent bloqués. Le compteur CT2 reçoit donc sur son entrée RAZ une tension positive et est remis à zéro. Il délivre alors sur sa sortie une impulsion de tension de niveau bas dont la durée est au minimum égale à la durée de temporisation (de l'ordre de 20 millisecondes), liée à la fréquence de l'oscillateur A1. Cette temporisation est relancée à chaque blocage de Q2' et Q2, tant que l'amplitude du signal ϕ reste proche du potentiel B+C. Q6 et Q7 deviennent bloqués pendant cette durée et la borne SENSE du circuit REG' est en l'air. Le circuit REG' est conçu pour faire alors chûter le courant d'excitation, ce qui va provoquer une diminution du signal ϕ en deçà du seuil précité. Une fois que ce signal est revenu en deçà du seuil prédéterminé par la jonction émetteur basé de Q2', les transistors Q2' et Q2 amènent l'entrée RAZ du compteur CT2 à un niveau de tension bas, pour le libérer. La sortie de CT2 est à nouveau amenée au niveau haut après temporisation, et Q6 et Q7 sont à nouveau passants pour appliquer à l'entrée SENSE la tension légèrement inférieure à B+A.

Ainsi le circuit construit autour de Q2', Q2, CT2, Q6 et Q7 assure pendant la phase de démarrage une régulation du signal ϕ pour l'amener à varier étroitement autour d'une valeur de seuil par exemple de l'ordre de 9 à 10 volts, afin que le circuit REG', recevant également cette tension sur son entrée ϕ, provoque l'extinction de la lampe LT. Cette extinction s'effectue en effet classiquement lorsque ledit circuit REG' détecte par lui-même que le signal ϕ excède une valeur prédéterminée par exemple de 8 volts.

En outre, la temporisation rapide effectuée par le compteur CT2 permet de mémoriser le niveau d'amplitude phase ϕ entre deux alternances positives. En effet, la durée de temporisation de l'ordre de 20 millisecondes est supérieure à la période du signal ϕ même lorsque le moteur à combustion associé tourne au ralenti. En l'absence de CT2, l'entrée SENSE serait commutée à la fréquence du signal alternatif ϕ et la régulation prioritaire du signal ϕ entre 9 et 10 volts ne pourrait être contrôlée.

Et comme dans le cas de la figure 2, cette régulation prioritaire permet de ne pas charger l'alternateur, afin de minimiser le couple résistant qu'il présente au moteur.

Par ailleurs, tant que la lampe LT reste allumée (c'est-à-dire que la borne LT du circuit REG' est à la masse), le transistor Q5 est bloqué et un niveau de tension haut est appliqué par celui-ci sur la borne de remise à zéro du compteur CT1. La sortie OUT de celui-ci délivre donc une tension nulle et n'est pas capable de polariser Q6.

Une fois que la lampe LT est éteinte (c'est-à-dire que la borne LT du circuit REG' est amenée en l'air), le transistor Q5 est polarisé via le pont diviseur constitué par la lampe LT et les résistances R21 et R22. Q5 devient donc passant et un niveau de tension bas est appliqué à l'entrée du compteur CT1, qui est libéré. Ce compteur, sur la base des créneaux fournis par A1, va accomplir une temporisation de longue durée, par exemple de l'ordre de 10 secondes. Pendant cette temporisation, la sortie de CT1 reste à zéro n'influe pas sur le fonctionnement décrit plus haut. A l'issue de cette temporisation, la sortie de CT1 passe à un niveau de tension haut et Q6 devient polarisé en permanence. Q7 est donc passant en permanence et la régulation s'effectue à partir de ce moment là de la façon normale, sur la base d'une tension voisine de la tension de batterie B+A (à la chûte de tension dans Q7 près).

En conclusion, le circuit de la figure 3, d'une manière analogue à celui de la figure 2 mais avec les adaptations nécessaires au cas du régulateur dit "multifonction", permet d'assurer pendant une certaine durée suivant le début du démarrage une régulation prioritaire permettant l'extinction de la lampe témoin tout en limitant autant que possible la charge de l'alternateur et donc le couple résistant qu'il exerce sur le moteur et le démarreur.

En outre, dans les deux cas, la temporisation se prolonge avantageusement pendant une certaine durée après que le moteur a été mis en route, afin de faciliter la stabilisation de celui-ci sur son régime de ralenti.

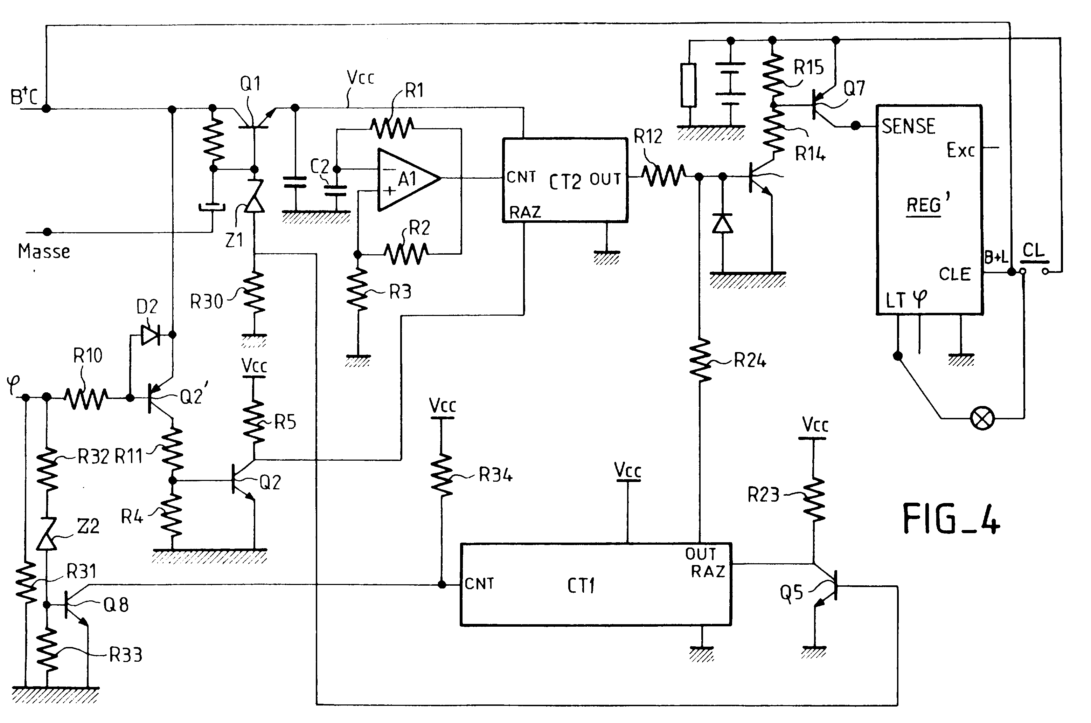

La figure 4 représente une variante de réalisation du circuit de la figure 3.

Les deux particularités essentielles du circuit de la figure 4 par rapport à celui de la figure 3 sont les suivantes:
- la libération du compteur CT1 n'est plus assurée à partir de la borne LT du circuit REG', mais à partir du circuit d'alimentation stabilisée construit autour du transistor Q1, comme dans le cas de la figure 2.
- le cadencement du compteur CT1 n'est plus assuré par le circuit oscillateur construit autour de A1, qui est utilisé uniquement par le compteur CT1, mais par un étage particulier prévu entre l'entrée pour le signal de phase ϕ et l'entrée CNT du compteur CT1.

Plus précisément, le pied de la diode zéner Z1 est relié à la masse via une résistance R30, et le point commun entre Z1 et R30 attaque la base d'un transistor NPN Q5 dont l'émetteur est à la masse et dont le collecteur est relié à la tension Vcc par une résistance R23. Le collecteur de Q5 attaque l'entrée de remise à zéro RAZ du compteur CT1.

En outre, l'entrée pour le signal de phase ϕ est reliée à la masse par une résistance R31 et, en parallèle avec R31, par le branchement en série d'une résistance R32, d'une diode zéner Z2 et d'une résistance R33. Le point commun entre Z2 et R33 est relié à la base d'un transistor NPN Q8 dont l'émetteur est à la masse et dont le collecteur est relié à la tension Vcc par une résistance R34. Le collecteur de Q8 attaque l'entrée CNT du compteur CT2.

Pour le reste, le circuit de la figure 4 reprend les éléments de celui de la figure 3.

Le fonctionnement des parties du circuit décrites ci-dessus est le suivant.

Lorsque la tension B+C est appliquée au collecteur de Q1 suite à la fermeture de l'interrupteur CL, la tension d'alimentation Vcc est engendrée et, simultanément, une certaine tension, voisine de la différence entre B+C et la tension de zéner, apparaît aux bornes de R30. Cette tension polarise la base de Q5, qui est rendu passant. L'entrée RAZ de CT1 passe donc du niveau haut au niveau bas, pour libérer CT1 et débuter la temporisation longue assurée par ce compteur.

Le circuit construit autour de Q8 est destiné à convertir le signal de phase ϕ, essentiellement sinusoïdal, en des créneaux de même période. Plus précisément, selon le niveau de la tension ϕ, le transistor Q8 est alternativement bloqué et saturé.

Un avantage de la libération du compteur CT1 par la fermeture de la clé de contact et non plus par l'état de la borne de sortie LT du circuit REG' réside en ce que la temporisation longue n'est plus tributaire d'éventuels défauts de fonctionnement détectés par le régulateur.

En outre, en incrémentant le compteur CT1 en fonction de la cadence du signal ϕ, on fait varier la durée de la temporisation longue en fonction de la vitesse à laquelle tourne le moteur aussi bien pendant son entraînement par le démarreur que pendant sa mise en route, ce qui permet de prendre en compte l'environnement extérieur (démarrage à chaud, à froid, batterie plus ou moins chargée...). De plus, le compteur CT1 n'est pas incrémenté lorsque l'alternateur ne tourne pas ou que l'amplitude du signal de phase ϕ n'a pas atteint un niveau suffisant défini par la diode zener Z2.

Bien entendu, la présente invention n'est nullement limitée aux formes de réalisation décrites ci-dessus et représentées sur les dessins, mais l'homme de l'art saura y apporter toute variante ou modification conforme aux revendications.

## Revendications

1. Circuit d'alternateur, notamment pour véhicule automobile, du type comprenant:
un alternateur (AN) pourvu d'un enroulement d'excitation (IND),
des premiers moyens de redressement (D ) délivrant une tension continue de sortie d'alternateur et reliés à une batterie (B),
des seconds moyens de redressement (DT) pour délivrer une tension continue auxiliaire (D+),
des moyens régulateurs (REG) de l'excitation de l'alternateur en fonction de la charge de celui-ci, pour réguler la tension continue de sortie d'alternateur sur un niveau nominal, et
des moyens de régulation prioritaire au démarrage (A1, CT1, Q3, Q4) capables, pendant une certaine durée limitée lors du démarrage d'un moteur à combustion associé, de maintenir ladite tension continue auxiliaire (D+) au voisinage d'une valeur de consigne choisie de telle sorte que la tension de sortie d'alternateur soit régulée sur une valeur d'un niveau inférieur audit niveau nominal, pour ainsi limiter le débit de l'alternateur vers des charges électriques en service reliées à la sortie des premiers moyens de redressement (D) et à la batterie (B), caractérisé en ce qu'il comprend en outre une lampe (LT) de signalisation de défauts branchée entre la sortie des premiers moyens de redressement (D) et la sortie des seconds moyens de redressement (DT), et en ce que ladite valeur de consigne est égale à la tension de batterie (B+) diminuée d'une tension prédéterminée de faible valeur, ladite tension prédéterminée de faible valeur étant choisie de telle sorte que la lampe de signalisation (LT), qui est exposée à celle-ci, soit éteinte.

2. Circuit selon la revendication 1, caractérisé en ce que les moyens de régulation prioritaire comprennent un moyen de commutation (Q4) relié à une entrée de détection (SENSE) desdits moyens régulateurs (REG) et capable de délivrer à cette entrée deux états distincts, induisant respectivement une diminution et un accroissement de l'excitation de l'alternateur, en fonction de la valeur de ladite tension continue (D+) en sortie des seconds moyens de redressement (DT) par rapport à ladite valeur de la tension de batterie (B+) diminuée de ladite tension prédéterminée de faible valeur.

3. Circuit selon la revendication 2, caractérisé en ce que le moyen de commutation comprend un commutateur à semi-conducteur (Q4) et en ce que ladite tension prédéterminée de faible valeur est égale à la tension émetteur-base dans ledit commutateur à semi-conducteur (Q4).

4. Circuit selon l'une des revendications 2 et 3, caractérisé en ce que le moyen de commutation (Q4) est activé pendant ladite durée limitée par un moyen de temporisation (CT1) dont une sortie est reliée à une entrée de commande dudit moyen de commutation.

5. Circuit d'alternateur, notamment pour véhicule automobile, du type comprenant:
un alternateur (AN) pourvu d'un enroulement d'excitation (IND),
des moyens de redressement (D) délivrant une tension continue de sortie d'alternateur et reliés à une batterie (B),
une lampe (LT) de signalisation des défauts,
des moyens régulateurs (REG') de l'excitation de l'alternateur en fonction de la charge de celui-ci, pour réguler la tension continue de sortie d'alternareur sur un niveau nominal, ces moyens régulateurs comprenant en outre une borne de sortie (LT) pour commander l'état de la lampe en fonction de l'amplitude d'un signal à composante alternative (ϕ) délivré par l'alternateur par rapport à une valeur de seuil,
des moyens de régulation prioritaire (A1, CT1, CT2, Q6, Q7) capables, dans certaines circonstances et pendant une certaine durée limitée, de maintenir l'amplitude dudit signal à composante alternative (ϕ) au voisinage d'une valeur de consigne choisie de telle sorte que la tension de sortie d'alternateur soit régulée sur une valeur d'un niveau inférieur audit niveau nominal, pour ainsi limiter le débit de l'alternateur vers des charges électriques en service reliées à la sortie des premiers moyens de redressement (D) et à la batterie (B), ladite valeur de consigne étant en outre choisie supérieure à ladite valeur de seuil afin d'éviter dans ces circonstances l'allumage de la lampe (LT),
caractérisé en ce que lesdites certaines circonstances correspondent à une période de démarrage du moteur à combustion associé, et en ce que ladite valeur de consigne est égale à la tension de batterie (B+) diminuée d'une tension prédéterminée de valeur suffisament faible pour que ladite valeur de consigne soit supérieure à ladite valeur de seuil.

6. Circuit selon la revendication 5, caractérisé en ce que les moyens de régulation prioritaire au démarrage comprennent un moyen de commutation (Q7) appliqué à une entrée de détection (SENSE) desdits moyens régulateurs et capables de délivrer à cette entrée deux états distincts, induisant respectivement une diminution et un accroissement de l'excitation de l'alternateur.

7. Circuit selon la revendication 6, caractérisé en ce que les moyens de régulation prioritaire comprennent un premier moyen de temporisation (CT2) limitant la durée pendant laquelle l'état délivré à l'entrée de détection des moyens de régulation provoque une diminution de l'excitation.

8. Circuit selon l'une des revendications 6 et 7, caractérisé en ce que l'alternateur est de type polyphasé et en ce que ledit signal à composante alternative est une tension de phase (ϕ) délivrée par l'alternateur.

9. Circuit selon l'une des revendications 6 à 8, caractérisé en ce que le moyen de commutation est activé pendant ladite durée limitée par un deuxième moyen de temporisation (CT1) dont une sortie est reliée à une entrée de commande dudit moyen de commutation (Q7).

10. Circuit selon la revendication 9, caractérisé en ce que le deuxième moyen de temporisation (CT1) comporte un moyen d'initialisation (Q5) sensible à l'état de la borne de sortie (LT) de commande de l'état de la lampe.

11. Circuit selon la revendication 9, caractérisé en ce que le deuxième moyen de temporisation comporte un moyen d'initialisation (Q5) sensible à l'établissement d'une tension d'alimentation (Vcc) des moyens de régulation prioritaire.

12. Circuit selon l'une des revendications 9 à 11, caractérisé en ce que le deuxième moyen de temporisation est cadencé par des signaux dont la période est liée à celle dudit signal à composante alternative (ϕ).

## Patentansprüche

1. Drehstromgeneratorschaltung, insbesondere für Kraftfahrzeuge, umfassend:
einen Drehstromgenerator (AN) mit einer Erregerwicklung (IND),
erste Gleichrichtermittel (D), die eine Gleichspannung am Ausgang des Drehstromgenerators liefern und mit einer Batterie (B) verbunden sind,
zweite Gleichrichtermittel (DT), um eine Hilfsgleichspannung (D+) zu liefern,
Reglermittel (REG) für die Erregung des Drehstromgenerators in Abhängigkeit von dessen Belastung, um die Gleichspannung am Ausgang des Drehstromgenerators nach einem Nennpegel zu regeln, und
Mittel für eine vorrangige Anlaufregelung (A1, CT1, Q3, Q4), die während einer gewissen begrenzten Dauer beim Anlaufen eines zugehörigen Verbrennungsmotors in der Lage sind, die besagte Hilfsgleichspannung (D+) in der Nähe eines Sollwerts zu halten, der so gewählt ist, daß die Ausgangsspannung des Drehstromgenerators auf einen Wert eines Pegels geregelt wird, der niedriger als der besagte Nennpegel ist, um dadurch die Stromabgabe des Drehstromgenerators an eingeschaltete elektrische Verbraucher zu begrenzen, die mit dem Ausgang der ersten Gleichrichtermittel (D) und mit der Batterie (B) verbunden sind,
**dadurch gekennzeichnet,** daß sie außerdem eine Störungsanzeigelampe (LT) umfaßt, die zwischen dem Ausgang der ersten Gleichrichtermittel (D) und dem Ausgang der zweiten Gleichrichtermittel (DT) geschaltet ist, und daß der besagte Sollwert gleich der Batteriespannung (B+) abzüglich einer vorbestimmten Spannung mit niedrigem Wert ist, wobei die besagte vorbestimmte Spannung mit niedrigem Wert so gewählt ist, daß die ihr ausgesetzte Anzeigelampe (LT), ausgeschaltet ist.

2. Schaltung nach Anspruch 1 , **dadurch gekennzeichnet,** daß die Vorrangregelungsmittel ein Schaltmittel (Q4) umfassen, das mit einem Erfassungseingang (SENSE) der besagten Reglermittel (REG) verbunden und in der Lage ist, an diesen Eingang zwei verschiedene Zustände anzulegen, die zu einer Verringerung bzw. zu einer Erhöhung der Erregung des Drehstromgenerators führen, in Abhängigkeit vom Wert der besagten Gleichspannung (D+) am Ausgang der zweiten Gleichrichtermittel (DT) im Verhältnis zu dem besagten Wert der Batteriespannung (B+) abzüglich der besagten vorbestimmten Spannung mit niedrigem Wert.

3. Schaltung nach Anspruch 2 , **dadurch gekennzeichnet,** daß das Schaltmittel einen Halbleiterschalter (Q4) umfaßt und daß die besagte vorbestimmte Spannung mit niedrigem Wert gleich der Emitter-Basis-Spannung in dem besagten Halbleiterschalter (Q4) ist.

4. Schaltung nach einem der Ansprüche 2 und 3 , **dadurch gekennzeichnet,** daß das Schaltmittel (Q4) während der besagten begrenzten Dauer durch ein Verzögerungsmittel (CT1) aktiviert wird, dessen Ausgang mit einem Steuereingang des besagten Schaltmittels verbunden ist.

5. Drehstromgeneratorschaltung, insbesondere für Kraftfahrzeuge, umfassend:
einen Drehstromgenerator (AN) mit einer Erregerwicklung (IND),
Gleichrichtermittel (D), die eine Gleichspannung am Ausgang des Drehstromgenerators liefern und mit einer Batterie (B) verbunden sind,
eine Störungsanzeigelampe (LT),
Reglermittel (REG') für die Erregung des Drehstromgenerators in Abhängigkeit von dessen Belastung, um die Gleichspannung am Ausgang des Drehstromgenerators nach einem Nennpegel zu regeln, wobei diese Reglermittel außerdem eine Ausgangsklemme (LT) umfassen, um den Zustand der Lampe in Abhängigkeit von der Amplitude eines Signals mit Wechselspannungskomponente (ϕ) zu steuern, das durch den Drehstromgenerator im Verhältnis zu einem Schwellenwert geliefert wird,
Mittel für eine vorrangige Anlaufregelung (Al, CT1, CT2, Q6, Q7), die unter bestimmten Umständen während einer gewissen begrenzten Dauer in der Lage sind, die Amplitude des besagten Signals mit Wechselspannungskomponente (ϕ) in der Nähe eines Sollwerts zu halten, der so gewählt ist, daß die Ausgangsspannung des Drehstromgenerators auf einen Wert eines Pegels geregelt wird, der niedriger als der besagte Nennpegel ist, um dadurch die Stromabgabe des Drehstromgenerators an eingeschaltete elektrische Verbraucher zu begrenzen, die mit dem Ausgang der ersten Gleichrichtermittel (D) und mit der Batterie (B) verbunden sind, wobei der besagte Sollwert außerdem größer als der besagte Schwellenwert gewählt ist, um unter diesen Umständen das Einschalten der Lampe (LT) zu vermeiden,
**dadurch gekennzeichnet,** daß die besagten Umstände einer Anlaufperiode des zugehörigen Verbrennungsmotors entsprechen und daß der besagte Sollwert gleich der Batteriespannung (B+) abzüglich einer vorbestimmten Spannung mit ausreichend niedrigem Wert ist, damit der besagte Sollwert größer als der Schwellenwert ausfällt.

6. Schaltung nach Anspruch 5 , **dadurch gekennzeichnet,** daß die Mittel für die vorrangige Anlaufregelung ein Schaltmittel (Q7) umfassen, das an einen Erfassungseingang (SENSE) der besagten Reglermittel angelegt und in der Lage ist, an diesen Eingang zwei verschiedene Zustände anzulegen, die zu einer Verringerung bzw. einer Erhöhung der Erregung des Drehstromgenerators führen.

7. Schaltung nach Anspruch 6 , **dadurch gekennzeichnet,** daß die Vorrangregelungsmittel ein erstes Verzögerungsmittel (CT2) umfassen, das die Dauer begrenzt, während derer der an den Erfassungseingang der Regelungsmittel angelegte Zustand eine Verringerung der Erregung bewirkt.

8. Schaltung nach einem der Ansprüche 6 und 7 , **dadurch gekennzeichnet,** daß der Drehstromgenerator ein Mehrphasengenerator ist und daß das besagte Signal mit Wechselspannungskomponente eine durch den Drehstromgenerator abgegebene Phasenspannung (ϕ) ist.

9. Schaltung nach einem der Ansprüche 6 bis 8 , **dadurch gekennzeichnet,** daß das Schaltmittel während der besagten begrenzten Dauer durch ein Verzögerungsmittel (CT1) aktiviert wird, dessen Ausgang mit einem Steuereingang des besagten Schaltmittels (Q7) verbunden ist.

10. Schaltung nach Anspruch 9 , **dadurch gekennzeichnet,** daß das zweite Verzögerungsmittel (CT1) ein Initialisierungsmittel (Q5) umfaßt, das für den Zustand der Ausgangsklemme (LT) zur Steuerung des Zustands der Lampe empfindlich ist.

11. Schaltung nach Anspruch 9 , **dadurch gekennzeichnet,** daß das zweite Verzögerungsmittel ein Initialisierungsmittel (Q5) umfaßt, das für die Herstellung einer Speisespannung (Vcc) der Vorrangregelungsmittel empfindlich ist.

12. Schaltung nach einem der Ansprüche 9 bis 11, **dadurch gekennzeichnet,** daß das zweite Verzögerungsmittel durch Signale getaktet wird, deren Periode an diejenige des Signals mit Wechselspannungskomponente (ϕ) gebunden ist.

## Claims

1. An alternator circuit, more especially for a motor vehicle, of the type comprising:
an alternator (AN) provided with a exciting winding (IND),
first rectification means (D) supplying a continuous alternator output voltage and connected to a battery (B),
second rectification means (DT) to supply an auxiliary continuous voltage (D+),
regulator means (REG) for the excitation of the alternator as a function of the charge thereof, to regulate the continuous alternator output voltage to a nominal level, and
start-up priority regulation means (A1, CT1, Q3, Q4) capable, during a certain limited period at the start up of an associated combustion engine, of keeping the said auxiliary continuous voltage (D+) in the vicinity of a reference value chosen so that the alternator output voltage is regulated to a value at a level lower than the said nominal level, to thus limit the output of the alternator to electrical charges in service connected to the output of the first rectification means (D) and to the battery (B),
**characterised in that** it also comprises a fault signalling lamp (LT) connected between the output of the first rectification means (D) and the output of the second rectification means (DT),
**and in that** the said reference value is equal to the battery voltage (B+) reduced by a low-value predetermined voltage, the said low-value predetermined voltage being chosen in such a manner that the signalling lamp (LT), which is exposed thereto, is off.

2. A circuit according to Claim 1,
**characterised in that** the priority regulation means comprise a switching means (Q4) connected to a detection input (SENSE) of the said regulator means (REG) and capable of supplying to this input two distinct stages, inducing a reduction and an increase respectively in the excitation of the alternator, as a function of the value of the said continuous voltage (D+) at the output of the second rectification means (DT) in relation to the said value of the battery voltage (B+) reduced by the said low-value predetermined voltage.

3. A circuit according to Claim 2,
**characterised in that** the switching means comprises a semiconductor switch (Q4)
and in that the said low-value predetermined voltage is equal to the emitter-base voltage in the said semiconductor switch (Q4).

4. A circuit according to one of Claims 2 and 3,
**characterised in that** the switching means (Q4) is activated during the said limited period by a delay means (CT1), one output of which is connected to a control input of the said switching means.

5. An alternator circuit, more especially for a motor vehicle, of the type comprising:
an alternator (AN) provided with an exciting winding (IND),
rectification means (D) supplying a continuous alternator output voltage and connected to a battery (B),
a fault signalling lamp (LT),
regulator means (REG') for the excitation of the alternator as a function of the charge thereof, to regulate the continuous alternator output voltage at a nominal level, these regulator means also comprising an output terminal (LT) to control the state of the lamp as a function of the amplitude of an alternative-component signal (ϕ) supplied by the alternator in relation to a threshold value,
priority regulation means (Al, CT1, CT3, Q6, Q7) capable, in certain circumstances and for a certain limited period, of keeping the amplitude of the said alternative-component signal (ϕ) in the vicinity of a reference value chosen so that the alternator output voltage is regulated at a value of a level lower than the said nominal level, to thus limit the output of the alternator to electrical charges in service connected to the output of the first rectification means (D) and to the battery (B), the said reference value being furthermore chosen to be higher than the said threshold value so as to avoid the lighting of the lamp (LT) in these circumstances,
**characterised in that** the said certain circumstances correspond to a start-up period of the associated combustion engine,
**and in** the said reference value is equal to the battery voltage (B+) reduced by a predetermined voltage of a sufficiently low value so that the said reference value is greater than the said threshold value.

6. A circuit according to Claim 5,
**characterised in that** the priority regulation means at the start-up comprise a switching means (Q7) applied to a detection input (SENSE) of the said regulator means and capable of supplying to this input two distinct states, bringing about a reduction and an increase respectively in the excitation of the alternator.

7. A circuit according to Claim 6,
**characterised in that** the priority regulation means comprise a first delay means (CT2) limiting the period during which the state supplied at the detection input of the regulator means causes a reduction in the excitation.

8. A circuit according to one of Claims 6 and 7,
**characterised in that** the alternator is of the polyphase type **and in that** the said alternative-component signal is a phase voltage (ϕ) supplied by the alternator.

9. A circuit according to any one of Claims 6 to 8,
**characterised in that** the switching means is activated during the said limited period by a second delay means (CT1), one output of which is connected to a control input of the said switching means (Q7).

10. A circuit according to Claim 9,
**characterised in that** the second delay means (CT1) comprises an initialisation means (Q5) sensitive to the state of the output terminal (LT) for controlling the state of the lamp.

11. A circuit according to Claim 9,
**characterised in that** the said second delay means comprise an initialisation means (Q5) sensitive to the setting up of a supply voltage (Vcc) of the priority regulation means.

12. A circuit according to one of Claims 9 to 11,
**characterised in that** the said second delay means is pulsed by signals, the period of which is associated with that of the said alternative-component signal (ϕ).
